# EUROPÄISCHE PATENTANMELDUNG

(11) **EP 0 716 180 A1**
(43) Veröffentlichungstag der Anmeldung: **12.06.1996**
(21) Anmeldenummer: 95810744.3
(22) Anmeldetag: 29.11.1995
(51) Int. Cl.: D06M 11/40, D06M 13/148, D06M 13/402, D06M 13/256, D06M 13/292

(54) **Mercerisiernetzmittelzusammensetzungen**

(30) Priorität: 08.12.1994 CH 3725/94
(71) Anmelder: CIBA-GEIGY AG, CH-4002 Basel (CH)
(72) Erfinder: Stehlin, Albert, F-68300 Rosenau (FR); Maier, Thomas, Dr., D-79418 Schliengen (DE)

(57) **Zusammenfassung**

Beschrieben werden Mercerisiernetzmittelzusammensetzungen, enthaltend
(a) eine Verbindung der Formel 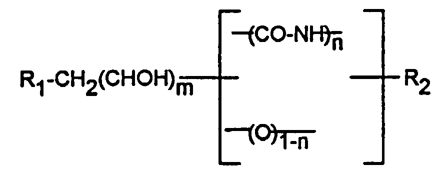 und
(b) einen Phosphorsäureester der Formel

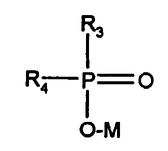

Die erfindungsgemässen Mercerisiernetzmittelzusammensetzungen zeichnen sich durch gutes Mercerisiernetzvermögen aus.

## Beschreibung

Die vorliegende Erfindung betrifft Mercerisiernetzmittelzusammensetzungen für cellulosehaltige Fasermaterialien, enthaltend Verbindungen auf Kohlenhydratbasis und Phosphorsäureester.

Die Mercerisierung ist ein üblicher Schritt bei der Verarbeitung von cellulosehaltigen Fasermaterialien und betrifft die Behandlung dieser Materialien mit wässrigem Alkalihydroxid.

Mercerisiernetzmittel müssen verschiedene applikatorische Anforderungen erfüllen. Zum einen sollen sie in den stark alkalischen Mercerisierflotten ein ausreichendes Netzvermögen aufweisen. Da die zu mercerisierende Ware in schnell arbeitenden Mercerisiermaschinen mit hoher Geschwindigkeit durch die Flotte bewegt wird, muß sie innerhalb einer kürzeren Zeit benetzt werden als dies bei langsamer arbeitenden Maschinen der Fall ist. Durch die höhere Durchlaufgeschwindigkeit des zu mercerisierenden Materials wird auf der Flotte vermehrt Schaum gebildet, wodurch z.B. bei der Gammercerisierung nicht nur eine schnelle, sondern auch eine gleichmäßige Benetzung des Garns verhindert wird. Ein weiteres Kriterium für ein gutes Mercerisiernetzmittel ist daher die Unterdrückung der Schaumbildung in der Mercerisierflotte. Weiterhin stört die Bildung von voluminösen Schaumschichten auch die Aufkonzentrierung und Rückgewinnung des Alkalihydroxids in den auf das Mercerisierbad folgenden Waschbädern.

Aus der EP-A-0,102,930 sind Mercerisiernetzmittel auf Basis von Schwefelsäureestern von Fettalkoholen bekannt, die sowohl ein gutes Netzvermögen aufweisen als auch schaumarm in der Anwendung sind. Leider sind diese Netzmittel aus ökologischer Sicht weniger vorteilhaft, da sie sich nur schwer biologisch abbauen lassen.

Überraschenderweise wurde nun gefunden, dass Zusammensetzungen, enthaltend Verbindungen auf Kohlenhydratbasis und gewisse Phosphorsäureester eine gute Netzwirkung besitzen und sich gleichzeitig durch eine geringe Schaumbildung auszeichnen.

Gegenstand der vorliegenden Erfindung sind daher Mercerisiernetzmittelzusammensetzugen, die
(a) eine Verbindung der Formel 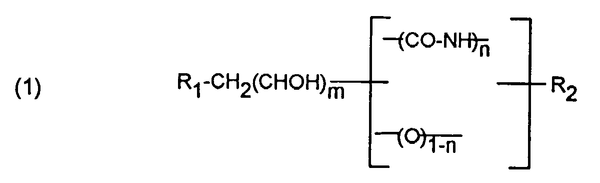 und
(b) einen Phosphorsäureester der Formel 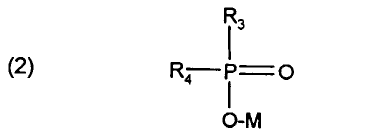 enthalten,
   worin
   - R₁: Hydroxy oder SO₃M
   - R₂: C₄-C₁₈Alkyl,
   - R₃: C₁-C₁₀-Alkoxy oder einen Rest der Formel

   (2a) R₅-O(CH₂-CH₂-O)ₚ-
   - R₄: O-M oder R₃
   - R₅: C₁-C₁₀-Alkyl
   - M: Wasserstoff oder ein Alkalimetall,
   - m: 2 bis 6
   - n: 1 oder 0 und
   - p: 1 bis 8
   bedeuten.

Gegenstand der vorliegenden Erfindung sind ferner die die Mercerisiernetzmittelzusammensetzungen enthaltenden Mercerisierflotten, ein Verfahren zur Mercerisierung von cellulosehaltigen Fasermaterialien sowie ein Verfahren zur Reduzierung der Schaumbildung bei der Rückgewinnung von Alkalihydroxid aus Mercerisierwaschbädern.

Bei den Verbindungen der Formel (1) entsprechend der Komponente (a) handelt es sich, wenn der Rest in der eckigen Klammer in Formel (1) -O- bedeutet (n=0), um Alkylglykoside (Alkyletherpolyole), bzw., wenn der Rest in der eckigen Klammer in Formel (1) -CO-NH-bedeutet (n=1), um Alkylcarboxamidoglykoside (Alkylglyconamide).

Die erfindungsgemäss verwendeten Alkylglykoside bzw. Alkylcarboxamidoglykoside sind an sich bekannte Verbindungen, deren Herstellung in zahlreichen Druckschriften beschrieben ist. So ist die Herstellung der Alkylglykoside z.B. in US-A-3,547,828; US-A-3,727,269; und US-A-3,839,318 und den europäischen Patentanmeldungen EP-A-0,301,298; EP-A-0,357,696; und EP-A-0,362,671 beschrieben. Dabei können die als Alkylglykoside bezeichneten Reaktionsprodukte aus Glykosen und Alkoholen der Formel

(1a) R₂-OH

worin
- R₂: C₄-C₁₈-Alkyl
bedeuten,
entweder durch direkte Umsetzung mit einem Überschuss des Alkohols und in Anwesenheit einer Säure, wie z.B. Chlorwasserstoff als Katalysator oder durch Umacetalisierung unter Mitverwendung eines niederen Alkohols, der gleichzeitig als Lösungsmittel und Reaktionspartner wirkt, hergestellt werden.

Bei den erfindungsgemäss verwendeten Alkylglykosiden handelt es sich z.B. um Reaktionsprodukte aus den Glykosen Glucose, Fructose, Mannose, Galactose, Talose, Gulose, Allose, Altrose, Isose, Arabinose, Xylose, Lyxose und Ribose und den entsprechenden C₄-C₁₈-Alkoholen, wobei die Glykosen glykosidisch miteinander verknüpft sein können.

Als Alkohole kommen dabei zweckmässigerweise geradkettige Alkohole in Betracht, die entweder synthetisch hergestellt werden oder die als Fettalkohole bekanntermassen aus natürlichen Rohstoffen zugänglich sind. Alkohole natürlicher Herkunft sind z.B. Myristylalkohol, Cetylalkohol, Stearylalkohol oder Oleylalkohol. Bei den synthetischen Alkoholen handelt es sich in erster Linie um Alkohole, die sich von verzweigten Kohlenstoffen ableiten, wie z.B. Isobutylalkohol, sek.Butanol, tert.Butanol, lsoamylalkohol, 2-Ethylbutanol, 2-Methylpentanol, 5-Methylheptan-3-ol, 2-Ethylhexanol, 1,1,3,3-Tetramethyl butanol, Octan-2-ol, Isononylalkohol, Trimethylhexanol, Trimethylnonylalkohol, n-Decanol, C₉-C₁₁-Oxoalkohol oder Hexadecylalkohol. Selbstverständlich kann es sich bei den Alkoholen auch um Mischungen handeln. Derartige Mischungen können sich insbesondere von den in der Fettchemie üblichen technischen Mischungen von geradkettigen C₄-C₁₈-Alkoholen ableiten.

Die erfindungsgemäss verwendeten Alkylglykoside können herstellungsbedingt geringe Mengen, vorzugsweise unter 2 Gew.-%, an nicht umgesetzten C₄-C₁₈-Alkoholen enthalten, was sich allerdings nicht nachteilig auf ihre Verwendung als Mercerisiernetzmittel auswirkt.

Erfindungsgemäss zu verwendende Alkylcarboxamidoglykoside der Formel (1) sind z.B. aus der FR-A-2,523,962 bekannt. Diese Verbindungen werden z.B. hergestellt durch Umsetzung einer Aldonsäure der Formel

(1b) R₁-CH₂(CHOH)ₘCOOH,

worin
- R₁: Hydroxy oder -SO₃M und
- m: 2 bis 6 bedeuten,
und die gegebenenfalls in Form eines Lactons vorliegen können, mit einem Amin der Formel

(1c) R₂-NH₂

worin
- R₂: C₄-C₁₈Alkyl
bedeutet.

Die Carboxylgruppe der Aldonsäure kann dabei mit Hilfe eines Carbodiimids, wie z.B. Dicyclohexylcarbodiimid in einem organischen Lösungsmittel aktiviert werden. Gegebenenfalls kann Hydroxybenzotriazol als Katalysator mitverwendet werden. Die Aldonsäuren werden zur Herstellung der erfindungsgemäss zu verwendenden Glycoside (Glyconamide) in Form ihrer Alkalisalze, wie z.B. als Natrium- oder Kaliumsalze eingesetzt.

Die Herstellung der Aldonsäuren der Formel (1b) erfolgt in an sich bekannter Weise durch Oxidation, wie z.B. elektrochemischer Oxidation der entsprechenden Monosaccharide. Als Aldonsäuren der Formel (1b) kommen beispielsweise in Betracht: Gluconsäure, Mannonsäure, Galactonsäure, Lyxonsäure, Arabinonsäure, Xylonsäure, Ribonsäure, Glucoheptonsäure oder Glucooctonsäure. Als Amine für die Herstellung der Alkylamidoglykoside der allgemeinen Formel (1) kommen z.B. in Betracht: n-Octylamin, tert. Octylamin, Decylamin, Dodecylamin, Laurylamin, Tetradecylamin, oder Miristylamin, Hexadecylamin oder Palmitylamin, sowie Octadecylamin oder Stearylamin.

Bevorzugt enthalten erfindungsgemäss verwendbare Mercerisiernetzmittelzusammensetzungen mindestens eine Alkylcarboxamidoglykosidverbindung der Formel

(3) R₁-CH₂(CHOH)ₘCO-NH-R₂,

worin
- R₁: Hydroxy oder -SO₃M,
- R₂: C₄-C₁₀-Alkyl,
- M: Alkalimetall und
- m: 2 bis 6
bedeuten,
und ganz besonders eine Verbindung der Formel (3), worin
- R₂: C₆-C₈-Alkyl
bedeutet.

Ganz besonders bevorzugt sind dabei Mercerisiernetzmittelzusammensetzungen, die eine Verbindung der Formel (3) enthalten, worin m 2 bis 4 bedeutet.

Enthalten die erfindungsgemässen Mercerisiernetzmittelzusammensetzungen eine Alkylglykosidverbindung, so handelt es sich dabei vorzugsweise um eine Verbindung der Formel

(4) R₁-CH₂(CHOH)ₘO-R₂,

worin
- R₁: Hydroxy oder -SO₃M,
- R₂: C₆-C₁₀-Alkyl
- M: Alkalimetall und
- m: 2 bis 6
bedeuten.

Von diesen Verbindungen sind wiederum solche bevorzugt, bei denen m 2 bis 4 bedeutet.

Die Verbindungen der Formel (1) werden in den erfindungsgemässen Mercerisiernetzmittelzusammensetzungen sowohl als Einzelverbindungen als auch als Gemische eingesetzt.

Als Gemische kommen vorzugsweise Verbindungen der Formeln

(5) NaSO₃-CH₂(CHOH)_{m₁}-OR₂

und 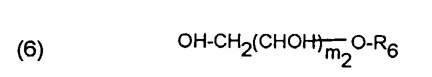 in Betracht, worin
- R₂: C₆-C₁₀-Alkyl
- R₆: C₄-C₈-Alkyl und
- m₁ und m₂: unabhängig voneinander 2 bis 4 bedeuten.

Als Verbindung der Formel (6) kommt insbesondere Butylglycosid in Frage.

Das Mischungsverhältnis der Verbindungen der Formel (5) und der Formel (6) beträgt dabei 9:1 bis 1:1, vorzugsweise 8:2 bis 6:4.

In Formel (2) bedeuten C₁-C₁₀-Alkyl und C₁-C₁₀-Alkoxy geradkettige oder verzweigte Alkyl-bzw. Alkoxyreste wie z.B. Methyl, Ethyl, n-Propyl, Isopropyl, n-Butyl, sek.Butyl, tert.Butyl, Amyl, lsoamyl oder tert.Amyl, Heptyl, Octyl, lsooctyl, Nonyl, Decyl, bzw. Methoxy, Ethoxy, Propoxy, Butoxy, Pentyloxy, Hexyloxy, Heptyloxy, Octyloxy, Isooctyloxy, Nonyloxy oder Decyloxy.

Bei den Verbindungen der Formel (2) entsprechend der Komponente (b) handelt es sich um Mono- oder Dialkylester der Orthophosphorsäure. Man erhält die Verbindungen in an sich bekannter Weise z.B. durch Umsetzung der entsprechenden C₁-C₁₀-Fettalkohole mit Phosphorpentoxid. Die Produkte werden als saure Ester, gewöhnlich jedoch in Form ihrer Alkalimetallsalze, insbesondere ihrer Natrium- oder Kaliumsalze eingesetzt. Für erfindungsgemäss eingesetzte Phosphorsäureester der Formel (2), worin R₄ und/oder R₃ einen Rest der Formel (2a) bedeuten, erfolgt die Herstellung zum Beispiel aus der Umsetzung von Phosphorpentoxid mit den entsprechenden oxethylierten C₁-C₁₀-Fettalkoholen.

Vorzugsweise werden in den erfindungsgemässen Mercerisernetzmittelzusammensetzungen als Komponente (b) Phosphorsäureester der Formel (2) eingesetzt, worin
- R₃: C₃-C₈-Alkoxy und
- R₄: C₃-C₈-Alkoxy oder -O-M
bedeuten.

Ganz besonders bevorzugt sind Phosphorsäureester der Formel (2), worin
- R₃: C₄-C₆-Alkoxy und
- R₄: C₄-C₆-Alkoxy oder -O-M
bedeuten.

Weiterhin bevorzugt sind Phosphorsäureester der Formel (2), worin
- R₃: einen Rest der Formel (2a),
- R₄: einen Rest der Formel (2a) oder -OM ,
- R₅: C₄-C₆-Alkyl und
- p: 1 bis 4
bedeuten.

M hat dabei jeweils die in Formel (2) angegebene Bedeutung.

Im Vordergrund des Interesses stehen Mercerisiernetzmittelzusammensetzungen, welche
(a) eine Alkylcarboxamidoglykosidverbindung der Formel

   (3) R₁-CH₂(CHOH)ₘCO-NH-R₂,

   und
(b) eine Verbindung der Formel (2),
   worin
   - R₁: Hydroxy oder -SO₃M
   - R₂: C₆-C₈-Alkyl
   - M: Alkalimetall,
   - m: 2 bis 6; und
   - R₃: C₄-C₆-Alkoxy und
   - R₄: C₄-C₆-Alkoxy oder -O-M
   bedeuten.

Das Mischungsverhältnis der Komponenten (a) und (b) kann in einem relativ weiten Bereich gewählt werden. Das optimale Verhältnis zwischen der Komponente (a) und (b) beträgt zum Beispiel 8:2 bis 0,5: 9,5. Besonders vorteilhafte Mercerisierwirkungen werden bei einem Mischungsverhältnis von 6:4 bis 1:9 erreicht.

Vorzugsweise enthalten die erfindungsgemässen Mercerisiernetzmittelzusammensetzungen
10 bis 30 Gew.-% der Komponente (a) und
50 bis 70 Gew.-% der Komponente (b).

Die Herstellung der erfindungsgemässen Mercerisiernetzmittelzusammensetzungen erfolgt in an sich bekannter Weise durch Vorlegen der Einzelkomponente (b). Sodann gibt man unter Rühren 50%ige KOH zu, bis sich ein pH-Wert von ca. 2,5 einstellt und gibt sodann die Komponente (a) hinzu. Es handelt sich dabei um einen rein physikalischen Vorgang. Eine chemische Reaktion der Einzelkomponenten findet dabei nicht statt.

Die erfindungsgemäss verwendeten Mercerisiernetzmittelzusammensetzungen werden vorzugsweise in Form einer wässrigen Lösung verwendet. Zu diesem Zweck werden 1 bis 20, vorzugsweise 2,5 bis 10 g der wässrigen Zusammensetzung pro Liter Mercerisierflotte verwendet.

Cellulosefasem erhalten durch die Mercerisierung beispielsweise einen höheren Glanz. Gleichzeitig werden ihre Farbstoffaufnahmefähigkeit sowie die Reissfestigkeit verbessert. Diese Fasem werden dazu mit konzentrierten Alkalihydroxid-Lösungen mit einer Konzentration von etwa 22 bis 28%, wie z.B. wässrigen Lösungen von Lithium-, Natrium- oder Kaliumhydroxid oder Mischungen dieser Hydroxide behandelt. Dabei können die Fasem einer gleichzeitigen Streckung unterworfen werden, wodurch sich eine weitere Steigerung des Glanzeffektes erzielen lässt. Am häufigsten wird die sogenannte Kaltmercerisierung (im Gegensatz zur Heissmercerisierung, die bei einer Badtemperatur von 20-80°C durchgeführt wird) angewendet. Die Badtemperatur beträgt im Falle der Kaltmercerisierung etwa -20 bis +20°C. Besondere Effekte, wie z.B. Transparenteffekte können durch Verwendung von bis auf -20°C abgekühlten Bädem erhalten werden. Vorzugsweise beträgt die Temperatur jedoch 5 bis 20°C. Je nachdem, ob die Fasem in trockenem, vorgekochtem oder vorgenetztem Zustand mercerisiert werden, spricht man von der Trocken- oder Nassmercerisation. Besonders die Trockenmercerisation macht verständlicherweise die Verwendung von sehr wirksamen Mercerisiernetzmitteln erforderlich.

Eine weitere, für die Mercerisierung positive Eigenschaft der erfindungsgemässen Mercerisiernetzmittelzusammensetzungen ist ihre Fähigkeit, die in den Alkalihydroxid-Lösungen der Mercerisierflotten enthaltenen Eisenionen zu binden. Die erfindungsgemässen Mercerisiernetzmittelzusammensetzungen zeichnen sich durch ein ausgezeichnetes Eisenbindevermögen aus, was den Vorteil hat, dass auf den zusätzlichen Einsatz von entsprechenden Komplexierungsmitteln in der Mercerisierflotte verzichtet werden kann.

Als cellulosehaltige Fasermaterialien kommen insbesondere Baumwolle und Mischgewebe mit Regeneratcellulosen wie z.B. Zellwollen und Kunstseiden (Reyon) in Frage. Die Mercerisierung von Mischgeweben aus nativen (z.B. Baumwolle, sowie Hanf und Flachs) und regenerierten Cellulosen stellt aber auf Grund der auseinanderstrebenden Eigenschaften dieser Komponenten hohe Anforderungen an die Konzentration und Zusammensetzung der Mercerisierflotten. Deshalb werden Mischgewebe fast ausschliesslich trocken mercerisiert, wodurch ein zusätzlicher (kritischer) Kontakt der Mischgewebe mit Koch- bzw. Netzbädern vermieden wird.

Technisch wird die Mercerisation als Gam- oder Stückmercerisation durchgeführt. Eine detaillierte Beschreibung dieser Verfahrensvarianten sowie auch der Mercerisation im allgemeinen ist z.B. in Lindner, Textilhilfsmittel und Waschrohstoffe, Wissenschaftliche Verlagsgesellschaft, Stuttgart, 1964, Band 2, Seite 1474ff angegeben.

Erfindungsgemässe Mercerisiernetzmittelzusammensetzungen ermöglichen aber auch eine schnelle und störungsfreie Rückgewinnung des Alkalihydroxids aus den auf das Mercerisierbad folgenden (Mercerisier-) Waschbädem. Beim Abdestillieren des Wassers aus diesen Bädem wird das im Mercerisierbad vorhandene Alkalihydroxid aufkonzentriert. Die Mercerisiernetzmillelzusammensetzungen neigen dabei nur sehr gering zur Schaumbildung. Die erhaltene konzentrierte Alkalihydroxid-Lösung kann dann im Mercerisierbad wieder verwendet werden.

Die folgenden Beispiele erläutern die Erfindung, ohne sie darauf zu beschränken. Teile und Prozente beziehen sich auf das Gewicht, sofern nichts anders angegeben ist.

### Beispiel 1: Herstellung der erfindungsgemässen Mercerisiernetzmittelzusammensetzung:

In einem Becherglas werden unter Rühren
140 g n-Butylphosphorsäureester mit
80,0 g 50%iger Kalilauge gemischt und dann
40,0 g der Verbindung der Formel 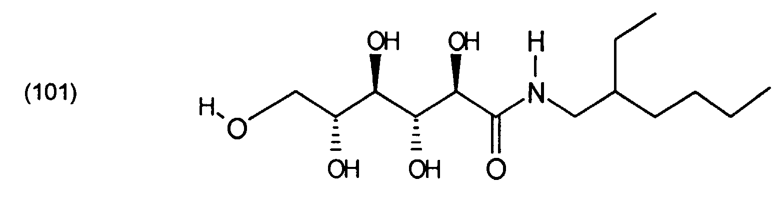 darin aufgelöst.

Die erhaltene Formulierung ist eine klare, dickflüssige, gelbliche Lösung.

### Beispiel 2:

In diesem Beispiel wird das Schrumpfvermögen von Baumwolle in Mercerisierbädern gemäss DIN 53987 bestimmt. Das Schrumpfvermögen ist definitionsgemäss diejenige Zeit, die benötigt wird, um das in der Mercerisierlauge eingetauchte Baumwollgam um einen gewissen Betrag seiner ursprünglichen Länge zu schrumpfen. Dazu wird ein Gamstrang aus abgekochter Rohbaumwolle (Gewicht: 1 g; Länge: 24 cm), der mit einem Gewicht von 33g beschwert ist, in einen mit der alkalischen Mercerisierlösung gefüllten Glaszylinder getaucht. Dabei wird die Zeit gemessen, die der Gamstrang benötigt, um in der Alkalihydroxid-Lösung, die 23,5 g 100%ige NaOH in 100 g Lauge enthält eine Schrumpfung von 20% zu erreichen. Die Netzmittelkonzentration beträgt 6 g/l. Die Ergebnisse sind in der Tabelle 1 angegeben.

**Tabelle 1**

| | | | Schrumpfvermögen | | |
|---|---|---|---|---|---|
| Komponente (a) | Komponente (b) | (a):(b) | 10% [s] | 20% [s] | Total*⁾ [%] |
| Verbindung der Formel (101) | n-Butylphosphorsäureester | 60:40 | 3 | 5 | 35,6 |
| Verbindung der Formel (101) | n-Butylphosphorsäureester | 40:60 | 3 | 5 | 35,6 |
| Verbindung der Formel (101) | n-Butylphosphorsäureester | 20:80 | 3 | 5 | 35,6 |
| Verbindung der Formel (101) | n-Butylphosphorsäureester | 10:90 | 3,5 | 5,5 | 35,8 |

| | | | | | |
|---|---|---|---|---|---|
| *⁾ Totalschrumpf, gemessen nach einer Eintauchzeit von 2 Minuten; der Wert gibt die Schrumpfung (in %) gegenüber der ursprünglichen Länge des getesteten Baumwollgarns an | | | | | |

Die Ergebnisse zeigen, dass die erfindungsgemässen Mercerisiernetzmittelzusammensetzungen ein gutes Mercerisiernetzvermögen aufweisen, da schon nach sehr kurzer Eintauchzeit effektive Schrumpfungswerte erzielt werden.

## Patentansprüche

1. Mercerisiernetzmittelzusammensetzungen, enthaltend
(a) eine Verbindung der Formel 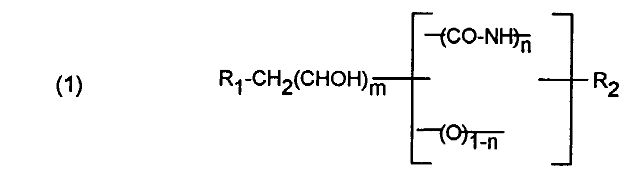 und
(b) einen Phosphorsäureester der Formel 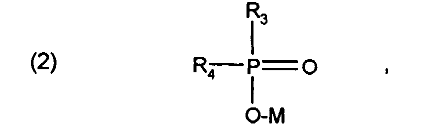 worin
R₁ Hydroxy oder SO₃M
R₂ C₄-C₁₈-Alkyl,
R₃ C₁-C₁₀-Alkoxy oder einen Rest der Formel
(2a) R₅-O(CH₂-CH₂₋O)_{p,}
R₄ O-M oder R₃
R₅ C₁-C₁₀-Alkyl
M Wasserstoff oder ein Alkalimetallion,
m 2 bis 6
n 1 oder 0 und
p 1 bis 8
bedeuten.

2. Mercerisiernetzmillelzusammensetzungen nach Anspruch 1, dadurch gekennzeichnet, dass sie mindestens eine Verbindung der Formel
(3) R₁-CH₂(CHOH)ₘCO-NH-R₂,
enthalten, worin
R₁ Hydroxy oder -SO₃M,
R₂ C₄-C₁₀-Alkyl,
M Alkalimetall und
M 2 bis 6
bedeuten.

3. Mercerisiernetzmittelzusarnmensetzungen nach Anspruch 2, dadurch gekennzeichnet, dass in Formel (3)
R₂ C₆-C₈-Alkyl
bedeutet.

4. Mercerisiernetzmittelzusammensetzungen nach Anspruch 1, dadurch gekennzeichnet, dass sie mindestens eine Verbindung der Formel
(4) R₁-CH₂(CHOH)ₘO-R₂,
enthalten, worin
R₁ Hydroxy oder -SO₃M,
R₂ C₆-C₁₀-Alkyl
M Alkalimetall und
m 2 bis 6
bedeuten.

5. Mercerisiernetzmittelzusammensetzungen nach einem der Ansprüche 1 bis 4, dadurch gekennzeichnet, dass sie als Komponente (b) eine Verbindung der Formel (2) enthalten, worin
R₃ C₃-C₈-Alkoxy;
R₄ C₃-C₈-Alkoxy oder -O-M und
M Alkalimetall
bedeuten.

6. Mercerisiernetzmittelzusammensetzungen nach Anspruch 5,, dadurch gekennzeichnet, dass sie als Komponente (b) eine Verbindung der Formel (2) enthalten, worin
R₃ C₄-C₆-Alkoxy;
R₄ C₄-C₆-Alkoxy oder -O-M und
M Alkalimetall
bedeuten.

7. Mercerisiernetzmittelzusammensetzungen nach einem der Ansprüche 1 bis 4, dadurch gekennzeichnet, dass sie als Komponente (b) eine Verbindung der Formel (2) enthalten, worin
R₃ einen Rest der Formel (2a),
R₄ einen Rest der Formel (2a) oder -OM ,
R₅ C₄-C₆-Alkyl und
p 1 bis 4
bedeuten.

8. Mercerisiernetzmittelzusammensetzungen nach Anspruch 1, enthaltend
(a) eine Alkylcarboxamidoglykosidverbindung der Formel
(3) R₁-CH₂(CHOH)ₘCO-NH-R₂,
worin
R₁ Hydroxy oder -SO₃M
R₂ C₆-C₈-Alkyl
M Alkalimetall,
m 2 bis 6; und
(b) eine Verbindung der Formel (2), worin
R₃ C₄-C₆-Alkoxy und
R₄ C₄-C₆-Alkoxy oder -O-M
bedeuten.

9. Mercerisiernetzmittelzusammensetzungen nach einem der Ansprüche 1 bis 8, dadurch gekennzeichnet, dass das Mischungsverhältnis der Komponente (a) und (b) 8:2 bis 0,5: 9,5 beträgt.

10. Mercerisiernetzmittelzusammensetzungen nach einem der Ansprüche 1 bis 9, enthaltend
10 bis 30 Gew.-% der Komponente (a) und
50 bis 70 Gew.-% der Komponente (b).

11. Verwendung der Mercerisiernetzmittelzusammensetzungen nach einem der Ansprüche 1 bis 10 zur Mercerisierung von cellulosehaltigen Fasermaterialien.

12. Verfahren zur Reduzierung der Schaumbildung bei der Rückgewinnung von Alkalihydroxid aus Mercerisierwaschbädem, dadurch gekennzeichnet, dass man dem Mercerisierbad eine Mercerisiernetzmittelzusammensetzung nach einem der Ansprüche 1 bis 10 zusetzt.
